Europäisches Patentamt

European Patent Office

Office européen des brevets

(11) Veröffentlichungsnummer: **0 026 499**
**B1**

(12) **EUROPÄISCHE PATENTSCHRIFT**

(45) Veröffentlichungstag der Patentschrift: **07.08.85**

(51) Int. Cl.⁴: **H 02 K 3/22,** H 02 K 3/24

(21) Anmeldenummer: **80200506.6**

(22) Anmeldetag: **30.05.80**

(54) **Rotor einer elektrischen Maschine.**

(30) Priorität: **26.07.79 CH 6905/79**

(43) Veröffentlichungstag der Anmeldung:
**08.04.81 Patentblatt 81/14**

(45) Bekanntmachung des Hinweises auf die
Patenterteilung:
**07.08.85 Patentblatt 85/32**

(84) Benannte Vertragsstaaten:
**CH DE FR GB LI SE**

(56) Entgegenhaltungen:
**CH-A- 374 415**
**CH-A- 438 473**
**CH-A- 439 474**
**DE-B-1 026 409**
**FR-A- 666 851**
**FR-A-2 109 936**
**GB-A-1 102 574**

(73) Patentinhaber: **BBC Aktiengesellschaft Brown,
Boveri & Cie.
Haselstrasse
CH-5401 Baden (CH)**

(72) Erfinder: **Pohl, Herbert, Dipl.-Ing-
Sooremattstrasse 435
CH-5212 Hausen (CH)**

Courier Press, Leamington Spa, England.

## Beschreibung

Die Erfindung bezieht sich auf einen Rotor einer elektrischen Maschine mit einer flüssigkeitsgekühlten zwei- oder mehrschichtigen Wicklung gemäss dem Oberbegriff des Patentanspruchs 1.

Ein Rotor dieser Gattung ist beispielsweise aus der FR—A-2 109 936 bekannt. Die Stirnbügel des bekannten Rotors sind im Rotorwickelkopf über Verbindungsstücke elektrisch zusammengeschaltet. Diese Verbindungsstücke sind als Kühlflüssigkeitszu-bzw. Kühlflüssigkeitsrückführungen ausgebildet. Der Anschluss der Verbindungsstücke an am Rotorende vorgesehenen Wasserkammern erfolgt über Isolierteile. Wie die Figur la erkennen lässt, beträgt der Höhenunterschied zweier durch einen Stirnbügel verbundener Windungs-hälften 1/6 der Nuthöhe (bei 6 Windungen je Nut). Die in Umfangsrichtung verlaufenden Verbindungsstücke sorgen in beiden Fällen für die notwendigen elektrischen und hydraulischen Verbindungen. Die Verbindungsstücke der Fig. la der FR—A-2—109 936 weisen einen Schenkel auf, der als Flüssigkeitszuführung bzw. -rückführung ausgebildet ist. Dieser Schenkel ist an das Verbindungsstück axial angesetzt.

Bei der aus der Be-B-1 026 409 bekannten innengekühlten Rotorwicklung sind die Lagen der Wicklung elektrisch hintereinander, kühlmittelmässig dagegen parallel geschaltet. Der einzelne Kühlmittelstrom ist jeweils nacheinander durch zwei elektrisch hintereinandergeschaltete Leiterstäbe mit entgegengesetzter Kühlmittelströmungsrichtung in den beiden Stäben geführt. Jeweils zwei Windungen in Parallelschaltung sind dabei an eine gemeinsame Zuführung des Kuhlmittels, die in den Stirnbügeln angeordnet ist, angeschlossen.

Ausgehend vom vorstehend geschilderten Stand der Technik liegt der Erfindung, wie sie in den Patentansprüchen gekennzeichnet ist, die Aufgabe zugrunde, di axiale Ausladung der Stirnbügel im Wickelkopf soweit wie möglich zu verkleinern, um dadurch die hochbeanspruchten Rotorkappen zu entlasten, und gleichzeitig eine optimale Kühlflüssigkeitsführung unabhängig von Flieh- und Corioliskräften zu schaffen.

Durch die erfindungsgemässe Ausbildung und Anordnung der Stirnbügel vermindert sich die axiale Länge des Wickelkopfes um annäherend 15% gegenüber der bekannten Anordnung. Somit kann auch die axiale Länge der Rotorkappe kürzer bemessen werden. Darüber hinaux werden die Erregerverluste durch die Wickelkopfverkürzung reduziert. Ein weiterer Vorteil der Erfindung ist darin zu sehen, dass nunmehr die Verbindung zwischen den Stirnbügeln und den Verbindungsstücken z.T. ausserhalb der Maschein hergestellt werden kann, was bei den gekreuzten Stirnbügeln des bekannten Rotors nicht möglich ist, Von wesentlicher Bedeutung ist ferner, dass die konzentrisch angeordneten Spulen einer Schicht für sich unmittelbar in Reihe geschaltet sind (für eine einzelne Wicklungsschicht an sich bekannt durch die oben genannte DE—B—1 026 409. Erst dies ermöglicht in Verbindung mit der radialen Zuführung der Kühlflüssigkeit und deren Verzweigung in derselben radialen Höhe in den in Umfangsrichtung verlaufenden Teilen der Verbindungsstück eine optimale Flüssigkeitsführung unabhängig von Flieh- und Coriolis-Kräften, was wiederum eine gleichmässigere Wärmeabfuhr zur Folge hat.

In Rotorlängsachse gesehen sind aufeinanderfolgende Stirnbügel abwechselnd an die Kühlmittelzufur und die Kühlmittelrückführung angeschlossen. Auf diese Weise lassen sich die Isolierteile gruppenweise zusammenfassen. Jeweils eine Gruppe von Isolierteilen ist dann einer Wasserkammer zugeordnet.

Bei einer Zweischnichtwicklung sind zumindest die Wicklungsleiter der inneren Wicklungslage zur Rotorachse hin abgeköpft; die Verbindungsstücke in den Stirnbügeln der äusseren Wicklungslage liegen zwischen innerer une äusserer Lage, diejenigen der inneren Lage sind unter der inneren Lage angeordnet. Dies ergibt einen sehr übersichtlichen und Kontrollzwecken entgegenkommenden Aufbau und ermöglicht eine zuverlässige Abstützung der Stirnbügel gegenüber der Rotorkappe: Die Stirnbügel der äussersten Schicht stützen sich praktisch unmittelbar an der Rotorkappe ab, während zwischen den weiter innen liegenden Stirnbügellagen vorzugsweise als Ringsegmente ausgebildete Abstützelemente Verwendung finden können.

Die Erfindung wird nachstehend anhand eines in der Zeichnung dargestellten Ausführungsbeispiels näher erläutert.

In der Zeichnung zeigt:

Fig. 1 das Schema der elektrischen und hydraulischen Verbindungen der Rotorwicklung eines Turbogenerators,

Fig. 2 einen Schnitt durch das nichtantriebsseitige Ende eines Turborotors in vereinfachter Darstellung,

Fig. 3 eine Draufsicht und

Fig. 4 eine Seitenansicht eines Verbindungsstückes zur elektrischen und hydraulischen Verbindung der Stirnbügel im Rotorwickelkopf,

Fig. 5 einen Schnitt durch das Verbindungsstück gemäss Fig. 3 entlang deren Linie A—A—.

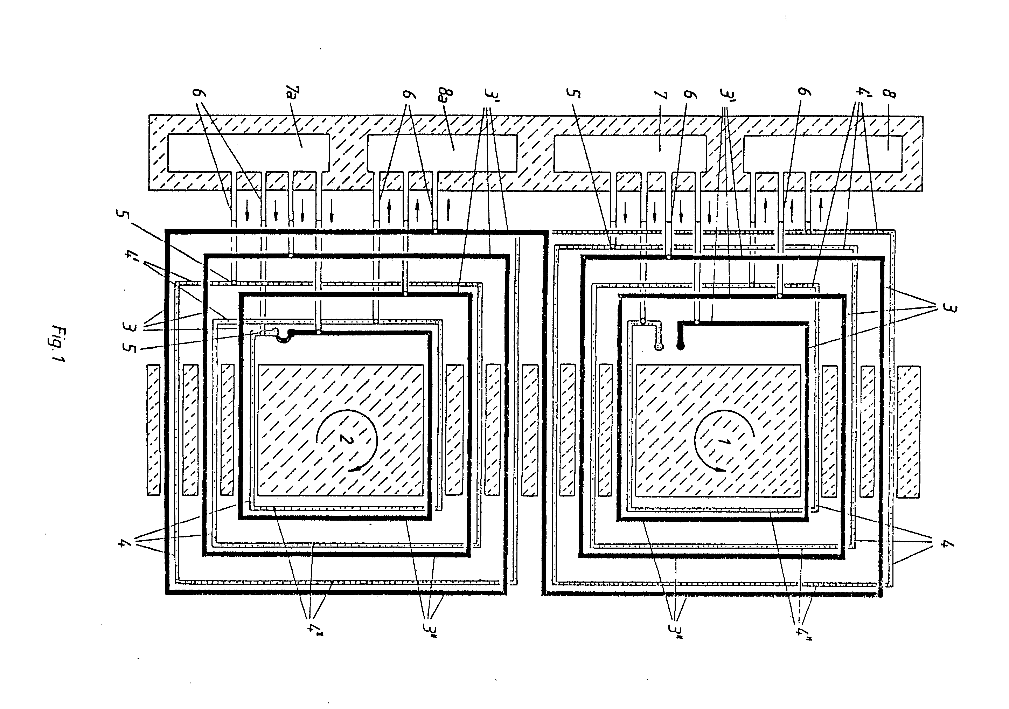

Das in Fig. 1 dargestellte Schema der elektrischen und hydraulischen Verbindungen der Rotorwicklung eines Turbogenerators bezieht sich aus Gründen einer übersichtlichen Darstellung auf einen e-poligen Rotor mit den Polzonen 1 und 2 und jeweils 6 Wicklungsnuten zwischen den beiden Polzonen. Die Wicklung ist eine flüssigkeitsgekühlte Zweischichtwicklung, wobei die Wicklungsleiter der äusseren oder Oberschicht 3 sowohl im Wickelkopf als auch im Nutteil als dicke Linien, diejenigen der inneren oder Unterschicht 4 als Doppellinien mit zwischenliegendem Punktraster gezeichnet, sind. Zur weiteren Vereinfachung der zeichnerischen Darstellung ist jeweils nur je ein Wicklungsleiter von Unter- und Oberschicht pro Nut eingezeichnet. Die Stirnbügel 3'' und 4'' im antriebsseitigen Rotorende verlaufen wie bei der Anordnung nach "Brown Boveri Mitteilungen" a.a.O. jeweils auf gleichen radialen Höhen. Während nun beim Bekannten im nichtantriebsseitigen Wickelkopf die Stirnbügel alle ihre radiale Höhe wechseln müssen, damit die entsprechenden elektrischen und hydraulischen Verbindungen hergestellt werden können, erfolgt im vorliegenden Fall die elektrische und hydraulische Verbindung der Wicklungsleiter 3 bzw. 4 über Stirnbügel 3' bzw. 4', welche gleichfalls auf gleicher radialer Höhe liegen. Die notwendige Kühlflüssigkeitszu- bzw. rückführung sowie die elektrische Verbindung erfolgt dabei über Verbindungsstücke 5 (in Fig. 1 nur als Kreise gezeichnet). Die Stirnbügel 3' bzw 4' verlaufen im wesentlichen parallel zueinander. In Rotorlängsachse gesehen sind aufeinanderfolgende Stirnbügel einer Schicht abwechselnd über Isolierteile 6 an die der Kühlflüssigkeitszufuhr bzw. Kühlflüssigkeitsabfuhr dienenden Wasserkammern 7, 7a bzw. 8, 8a angeschlossen. Die Isolierteile einer Stirnbügelschicht können damit gruppenweise zusammengefasst werden, wobei jede Gruppe an jeweils eine Wasserkammer angeschlossen ist. Dabe verlaufen die Isolierteile 6 jeder Schicht annährend im selben Abstand zur Rotorachse und sind in Umfangsrichtung gesehen unmittelbar benachbart.

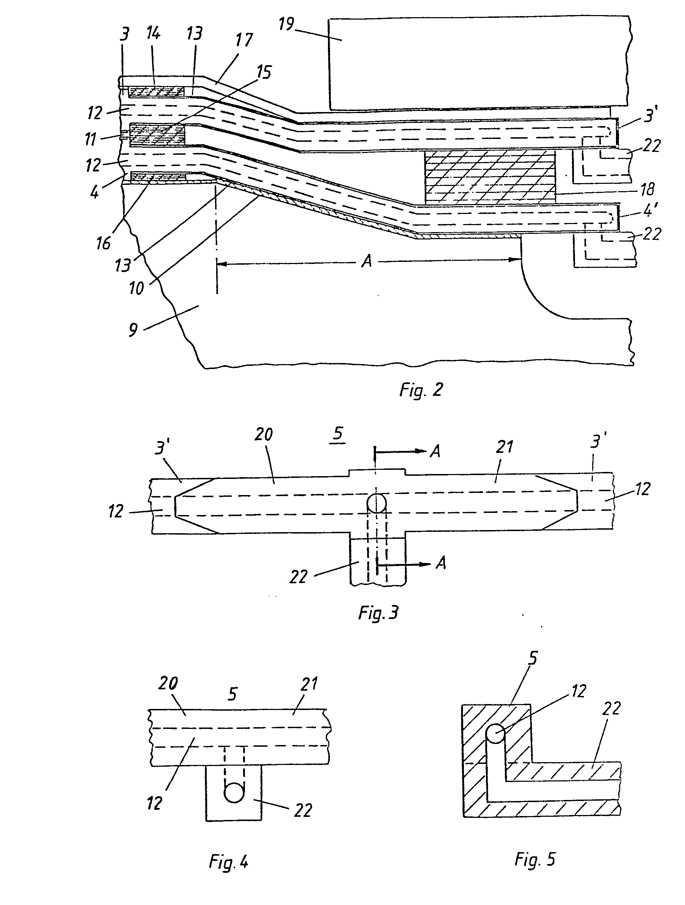

Einen Einblick in die tatsächliche Lage der Stirnbügel im nichtantriebsseitigen Wickelkopf vermittelt Fig. 2. Im Rotorkörper 9 ist die flüssigkeitsgekühlte Rotorwicklung unter Zwischenschaltung einer Nutisolation 10 und einer Lagenisolation 11 in Nuten eingelegt. Die Nuttiefe nimmt im Ende des Aktivteils (Bereich A) zur Rotorachse hin zu. Die Wicklungsleiter 3, 4 weisen Kühkkanäle 12 auf und sind mit einer Leiterisolation 13 versehen. Bereits vor dem Austritt aus dem Aktivteil sind die Wicklungs-leiter 3, 4 in radialer Richtung verjüngt. Distanzstücke 14, 15, 16 stützen die Wicklungsleiter ab. Mit 17 ist die Dämpferwicklung bezeichnet. Die Wicklungsleiter 3, 4 sind wickelkopfseitig radial nach innen abgekröpft und schaffen somit Raum zur elektrischen und hydraulischen Verbindung der Stirnbügel einer Schicht untereinander und mit den Wasserkammern 7, 7a bzw. 8, 8a (nicht in Fig. 2 eingezeichnet). Im Falle der hier dargestellten zweischichtigen Wicklung liegen die Verbindungsstücke 5 der Stirnbügel 3' der oberen Schicht zwischen innerer und äusserer Stirnbügellage. Zwischen beiden Lagen sind also Ringsegmente ausgebildete, gleichmässig über den Umfang verteilte Abstützelemente 18 z.B. aus Isolierstoff angeordnet. Somit stützt sich die innere Stirnbügellage gegen die äussere Stirnbügellage ab, die ihrerseits durch die Rotorkappe 19 gehalten ist. Auf nähere Einzelheiten des Wickelkopfes, wie Aufbau und Fixierung der Rotorkappe, Ausbildung und Anordnung der Wasserkammern und dergl. kann heir verzichtet werden, da diese konstruktiven Details zum Stand der Technik zu zählen sind (vgl. "Brown Boveri Mitt." Heft 1, 1978, S. 36 bis 41, insbesondere Bild 8 auf Seite 41).

Die Figuren 3, 4 und 5 zeigen die konstruktive Ausgestaltung eines Verbindungsstückes. Jedes Verbindungsstück 5 weist drei Schenkel 20, 21, 22 auf. Der Schenkel 22 liegt radial innerhalb der beiden anderen Schenkel und verläuft achsparallel. An ihn wird das Isolierteil 6 angeschlossen, das die Verbindung zu der jeweiligen Wasserkammer 7, 7a, 8 bzw. 8a herstellt. Als Isolierteile können beispielsweise aus der DE—OS 25 06 874 bekannte Kühlwasserschläuche Verwendung finden. Die beiden anderen Schenkel 20 und 21 sind an den Enden konisch abgeschrägt, wo sie mit entsprechend ausgebildeten Enden der Stirnbügel 3' resp. 4' hartverlötet sind. Die axiale Länge der Schenkel 22 hängt von der Lage des jeweils ihm zugeordneten Stirnbügels 3' ab und ist so gewählt, dass sämtliche Kühlwasserschläuche (Isolierteile 6) gleiche Länge aufweisen. Es kann dabei vorteilhaft sein, neben den Abstützelementen 18 zusätzliche Distanzstücke aus Isolierstoff (nicht dargestellt) zwischen radial aufeinanderfolgenden Schenken 22, Stirnbügeln bzw. zwischen diesen und der Rotorkappe 19 einzusetzen.

Bezugszeichenliste

1,2=Polzonen
3=Wicklungsleiter der Oberschicht
3'=Stirnbügel der Oberschicht im nichtantriebsseitigen Wickelkopf
3''=Stirnbügel der Oberschicht im antriebsseitigen Wickelkopf
4=Wicklungsleiter der Unterschicht
4'=Stirnbügel der Unterschicht im nichtantriebsseitigen Wickelkopf
4''=Stirnbügel der Unterschicht im antriebsseitigen Wickelkopf
5=Verbindungsstücke
6=Isolierteile (Kühlwasserschläuche)
7, 7a=Wasserkammern (Kühlwasserzufuhr)
8, 8a=Wasserkammern (Kühlwasserabfuhr)
9=Rotorkörper
10=Nutisolation
11=Lagenisolation
12=Kühlkanäle in den Wicklungsleitern bzw. Stirnbügeln
13=Leiterisolation
14, 15, 16=Distanzstücke
17=Dämpferwicklung
18=Abstützelement
19=Rotorkappe
20, 21, 22=Schenkel der Verbindungsstücke 5

**Patentansprüche**

1. Rotor einer elektrischen Maschine mit einer flüssigkeitsgekühlten zwei- oder mehrschichtigen Wicklung, deren Wicklungsleiter konzentrisch un Polzonen (1, 2) angeordnete Spulen bilden und deren Stirnbügel (3', 4') im Rotorwickelkopf über Verbindungsstücke (5) elektrisch zusammengeschaltet sind, wobei die Verbindungsstücke (5) drei Schenkel (20, 21, 22) aufweisen, der erste (20) und der zweite Schenkel (21) in der selben radialen Höhe wie die mit ihnen verbundenen Stirnbügelenden verlaufen und der dritte Schenkel (22), jeweils von Spule zu Spule wechselnd, als Kühlflüssigkeitszuführung bzw. -rückführung ausgebildet ist und über Isolierteile (6) an eine Zuführungs- bzw. Rückführungs-Wasserkammer (7, 7a bzw. 8, 8a) am Rotorende angeschlossen ist, dadurch gekennzeichnet, dass unter elektrisch unmittelbarer Reihenschaltung der Wicklungsleiter innerhalb jeder Schicht die Stirnbügel (3', 4'') jeder Wicklungslage (3, 4) im Wickelkopf auf ein und derselben radialen Höhe verlaufen der dritte Schenkel (22) radial innen liegt und achsparallel in Richtung Rotorende in einem Bereich verläuft, der dadurch gebildet ist, dass die Wicklungsleiter (4) der nächstinneren Wicklungslage zur Rotorachse hin abgekröpft sind.

2. Rotor nach Anspruch 1, dadurch gekennzeichnet, dass die Isolierteile (6) gruppenweise zusammengefasst sind und jede Gruppe an eine Wasserkammer (7, 7a, 8, 8a) angeschlossen ist.

3. Rotor nach Anspruch 1 oder 2, dadurch gekennzeichnet, dass die Isolierteile (6) für jede Schicht im selben Abstand zur Rotorachse verlaufen.

4. Rotor nach einem der Ansprüche 1 bis 3, dadurch gekennzeichnet, dass bei einer zweischichtigen Wicklung zumindest die Wicklungsleiter (4) der inneren Wicklungslage zur Rotorachse hin abgekröpft sind, die Verbindungsstücke (5) der Stirnbügel (3') der äussern Wicklungslage zwischen innerer und äusserer Stirnbügellage liegen, diejenigen der inneren Wicklungslage unter der inneren Stirnbügellage angeordnet sind.

5. Rotor nach Anspruch 4, dadurch gekennzeichnet, dass im Wickelkopf zumindest zwischen den beiden Stirnbügellagen Abstützelemente (18) vorgesehen sind, die vorzugsweise als Ringsegmente ausgebildet sind.

**Revendications**

1. Rotor d'un machine électrique comportant un enroulement en deux ou plusieurs couches, refroidi par un liquide, dont les conducteurs forment des bobines disposées de façon concentrique autour de zones polaires (1, 2) et dont les étriers frontaux (3', 4') sont reliés électriquement ensemble dans la tête de bobine du rotor par l'intermédiaire de pièces de raccordement (5), les dites pièces de raccordement (5) présentant trois branches (20, 21, 22) dont la première (20) et la seconde branche (21) sont disposées à la même hauteur radiale que les extrémités des étriers frontaux auxquelles elles sont raccordées et dont la troisième branche (22), changeant chaque fois de bobine en bobine, est constituée en arrivée respectivement en retour de liquide de refroidissement et est raccordée par des pièces isolante (6) à une chambre à eau d'arrivée, respectivement de retour (7, 7a, respectivement 8, 8a) à l'extrémité du rotor, caractérisé en ce que sous un montage électrique direct en série des conducteurs à l'intérieur de chaque couche, les étriers frontaux (3', 4') de chaque couche (3, 4) d'enroulement dans la tête de bobine sont situés à une seule et même hauteur radiale, et en ce que la troisième branche (22) se trouve à l'intérieur en direction radiale et s'étend parallèlement à l'axe en direction de l'extrémité du rotor dans une zone, qui est formée en coudant vers l'axe du rotor les conducteurs (4) de la couche la plus interne de l'enroulement.

2. Rotor suivant la revendication 1, caractérisé en ce que les pièces isolantes (6) sont assemblées par groupes et en ce que chaque groupe est relié à une chambre à eau (7, 7a, 8, 8a).

3. Rotor suivant la revendication 1 ou 2, caractérisé en ce que les pièces isolantes (6) sont, pour chaque couche, situées à la même distance de l'axe du rotor.

4. Rotor suivant l'une des revendications 1 à 3, caractérisé en ce que, pour un enroulement à deux couches, au moins les conducteurs (4) de la couche interne de l'enroulement sont coudés vers l'axe du rotor, en ce que les pièces de raccordement (5) des étriers frontaux (3') de la couche externe de l'enroulement sont placées entre la couche interne et la couche externe des étriers frontaux, et en ce que celles de la couche interne de l'enroulement sont disposées sous la couche interne des étriers frontaux.

5. Rotor suivant la revendication 4, caractérisé en ce que dans la tête de bobine, il est prévu au moins entre les deux couches d'étriers frontaux des éléments de support (18) qui présentent de préférence la forme de segments annulaires.

**Claims**

1. Rotor of an electric machine having a liquid-cooled two- or multi-layer winding, the winding conductors of which form coils which are concentrically arranged around pole zones (1, 2) and the end loops (3', 4') of which are electrically connected together in the rotor winding head via links (5), the links (5) being provided with three arms (20, 21, 22), the first (20) and the second arm (21) being arranged at the same radial level as the end-loop ends connected to them and the third arm (22), alternating in each case from coil to coil, being constructed as a coolant supply or return line and being connected via insulating parts (6) to a supply or return water chamber (7, 7a or 8, 8a) at the rotor end, characterised in that the end loops (3', 4') of each winding layer (3, 4), when the winding conductors within each layer directly connected electrically in series, are arranged in the winding head at one and the same radial level, the third arm (22) is located radially on the inside and arranged axially parallel in the direction of the rotor end in an area formed by the winding conductors (4) of the next winding layer on the inside being offset towards the rotor axis.

2. Rotor according to Claim 1, characterised in that the insulating parts (6) are combined in groups and each group is connected to a water chamber (7, 7a, 8, 8a).

3. Rotor according to Claim 1 or 2, characterised in that the insulating parts (6) are arranged for each layer at the same distance to the rotor axis.

4. Rotor according to one of Claims 1 to 3, characterised in that in a two-layer winding, at least the winding conductors (4) of the inner winding layer are offset towards the rotor axis, the links (5) of the end loops (3') of the outer winding layer are located between the inner and outer end loop position and those of the inner winding layer are arranged underneath the inner end loop position.

5. Rotor according to Claim 4, characterised in that, in the winding head, support elements (18), preferably constructed as ring segments, are provided at least between the two end loop layers.

0 026 499

Fig. 1

1

Fig. 2

Fig. 3

Fig. 4

Fig. 5